(19) Europäisches Patentamt
European Patent Office
Office européen des brevets

(11) Publication number: 0 302 181 B1

(12) **EUROPEAN PATENT SPECIFICATION**

(45) Date of publication of patent specification: **08.05.91 Bulletin 91/19**

(51) Int. Cl.[5]: **C07F 15/00**, A61K 31/28

(21) Application number: **88106222.8**

(22) Date of filing: **05.09.86**

(54) **A process for preparing platinum-(II)-cis-dichlorobis-(trishydroxymethylphosphine).**

(30) Priority: **05.09.85 ES 547481**
**23.10.85 ES 548849**

(43) Date of publication of application:
**08.02.89 Bulletin 89/06**

(61) Publication number of the earlier application in accordance with Art. 76 EPC: **0215393**

(45) Publication of the grant of the patent:
**08.05.91 Bulletin 91/19**

(84) Designated Contracting States:
**BE CH DE FR GB IT LI NL**

(56) References cited:
**JOURNAL OF THE CHEMICAL SOCIETY, Dalton Transactions, vol. 19, 1973, pages 2021-2028, London, GB; J. CHATT et al.: "Rhodium(I), rhodium(III), palladium(II), and platinum(II) complexes containing ligands of the type PRnQ3-n (n= 0,1, or 2; R= Me, Et, But, or Ph; Q= CH2OCOMe or CH2OH)"**

(73) Proprietor: **FERRER INTERNACIONAL, S.A.**
**Gran Via Carlos III, 94**
**08028 Barcelona (ES)**

(72) Inventor: **Foguet, Rafael**
**Llusanés 8**
**E-08022 Barcelona (ES)**
Inventor: **Sampedro, Federico**
**Francia 18-20**
**E-08024 Barcelona (ES)**
Inventor: **Ortiz, José A.**
**C rcega 429**
**E-08037 Barcelona (ES)**
Inventor: **Cayuela, Salvador**
**Loreto 46**
**E-08029 Barcelona (ES)**
Inventor: **Castell , Josep M.**
**Princep d'Asturias 35**
**E-08012 Barcelona (ES)**
Inventor: **de Andrés, Luis**
**Tarragona 40**
**El Papio (Barcelona) (ES)**
Inventor: **Bonal, Joaquin**
**Reus 26**
**E-08022 Barcelona (ES)**

(74) Representative: **Kinzebach, Werner, Dr. et al**
**Patentanwälte Reitstötter, Kinzebach und Partner Sternwartstrasse 4 Postfach 86 06 49**
**W-8000 München 86 (DE)**

EP 0 302 181 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for preparing Platinum(II) cis-dichlorobis(trishydroxymethylphosphine) of formula (I) :

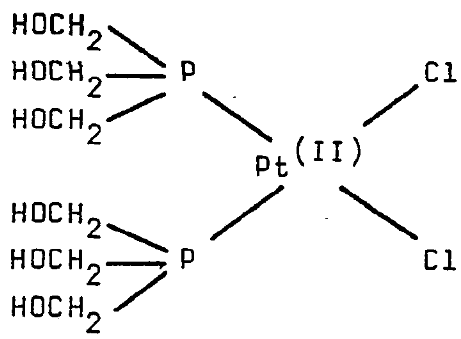

(I)

and to pharmaceutical compositions containing this compound.

The compound of this invention, Platinum(II) cis-dichlorobis(trishydroxymethylphosphine), is used as an intermediate in the preparation of the antitumor compounds disclosed in European Patent Application No. 86112285.1. In addition, applicants have found out that the aforesaid intermediate has a significant antitumor activity.

The compound of this invention has already been described by J. Chatt et al (J.Chem.Soc.-Dalton-, 2021-8,1973) who prepared it by reacting potassium chloroplatinite with tris(hydroxymethyl)phosphine. However, these authors did not mention any antitumor activity for the compound.

Applicants have found out that the preparation of Platinum(II) cis-dichlorobis(trishydroxymethylphosphine) can be carried out in a different way from that known so far, which consists in reacting platinum(II) dichloro (1,5-cyclooctadiene) with tris(hydroxymethyl)phosphine in a medium comprising a solvent selected from low molecular weight alkanols having 1 to 6 carbon atoms or their mixtures ; methanol and ethanol or their mixtures are preferred. Applicants have found out that when methanol and ethanol ratios range from 1 : 0.8 to 1 : 1.2 respectively, the reaction occurs suitably to give a better yield. This finding as well as the fact that the aforesaid compound has surprisingly proved to be an active antitumor compound account for the main purpose of the present invention. Moreover, the present invention provides a process described in such detailed terms as to enable any person skilled in the art to make and use the same, while the process by J. Chatt et al is not described experimentally and, consequently, it is difficult to be reproduced both on a small scale and on a large scale.

A practical way to determine the toxicity and activity on DNA in the screening for potential anti-tumor agents consists in testing selected compounds against bacterial cells. Thus, the toxicity, effect on bacterial DNA and SOS induction ability of the compound of the invention was tested against E.coli and showed an unmistakable anti-tumor activity. Escherichia coli K12 strains in LB culture medium grown at 37°C with aeration were used (J.H. Miller : Experiments in Molecular Genetics. Cold Spring Harbor Laboratory, New York, 1972). Culture aliquots of AB1157 and AB2463 E.coli were poured onto tubes containing different doses of compound (I). Two hours after incubation at 37°C with aeration, the specimens were placed on LB medium in the presence of streptomycin (75 µg/ml). Under these experimental conditions, compound (I) resulted more active than carboplatin. In addition, the toxicity increased when the bacterial strains were RecA which makes evident the participation of the SOS system in the restoration of the lesion produced by compound (I).

Therefore, Platinum(II) cis-dichlorobis(trishydroxymethylphosphine) is useful as a medication in the treatment of tumors and may be administered, mixed with suitable carriers, orally in the form of tablets, capsules, coated-tablets, granules, syrup, solution, etc., or by injection at daily doses ranging from 10 to 600 mg/m$^2$.

An example will now be described in non-limitative manner to illustrate the invention.

### Example 1

Platinum(II) cis-dichlorobis(trishydroxymethylphosphine) (I)

2.5 g (6.0 mmole) of potassium tetrachloroplatinite ($K_2PtCl_4$) are dissolved in 40 ml of water and filtered off. To the red filtrate, 60 ml of glacial acetic acid and 2.5 ml (20 mmole) of 1,5-cyclooctadiene are added. The mixture is immediately stirred and heated at nearly 90°C in a water bath. After 30 minutes approximately, the red solution slowly becomes light yellow and fine crystals are formed. The solution volume is reduced to about

30 ml by evaporation under reduced pressure. Light yellow needles are collected and washed successively with 50 ml of water, ethanol and ether. After drying for 1 hour at 100°C, 2.16 g of platinum(II) dichloro (1,5-cyclooctadiene) are obtained which decomposes without melting between 250 and 280°C.

4.60 g (12.29 mmole) of platinum(II) dichloro(1,5-cyclooctadiene) in 100 ml of ethanol are stirred and added to 3.92 g (31.59 mmole) of 95% tris(hydroxymethyl)phosphine dissolved in 200 ml of ethanol :methanol (1 : 3) under nitrogen atmosphere. The mixture is stirred until all solids have dissolved, filtered off and concentrated to dryness, then washed with carbon tetrachloride. Finally, the mixture is treated with absolute ethanol to remove any reacted phosphine residue. 3.5 g of Platinum(II) cis-dichlorobis(trishydroxymethylphosphine) are obtained. Yield : 55%. Melting point : 122-126°C.
IR Spectrum (KBr), $cm^{-1}$ : 3500-3000, 1360, 1020.
NMR Spectrum ($D_2O$) δ : 4.39 (t) J= 24.41Hz.

## Claims

1. A process for preparing Platinum(II) cis-dichlorobis (trishydroxymethylphosphine) having the formula (I):

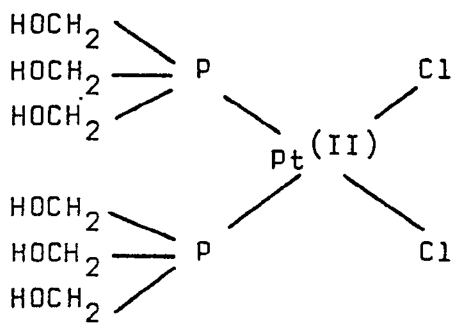

(I)

characterized in that platinum(II) dichloro(1,5-cyclooctadiene) is reacted with tris(hydroxymethyl) phosphine in a medium comprising a solvent selected from low molecular weight alkanols having 1 to 6 carbon atoms or their mixtures.

2. A process as claimed in Claim 1, wherein said low molecular weight alkanols are mixtures of methanol and ethanol in a ratio of 1 : 0.8 to 1 : 1.2.

3. Pharmaceutical compositions comprising the compound of Claim 1, optionally together with pharmaceutical carriers and/or adjuvants.

4. The use of the compound of Claim 1 for the preparation of pharmaceutical compositions for treating tumor diseases.

5. The compound of formula I for pharmaceutical use.

## Ansprüche

1. Verfahren zur Herstellung von Platin(II)cis-dichlorbis(trishydroxymethylphosphin) der Formel (I) :

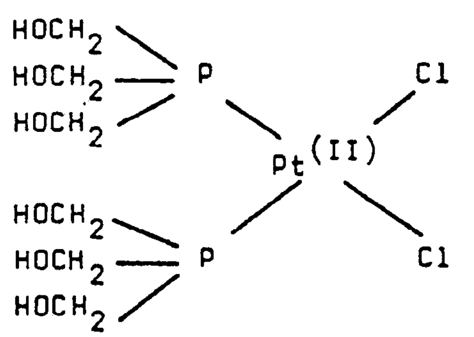

(I)

dadurch gekennzeichnet, daß Platin(II)dichlor(1,5-cyclooctadien) mit Tris(hydroxymethyl) phosphin in einem

Medium, umfassend ein Lösungsmittel, ausgewählt unter Alkanolen mit niedrigem Molekulargewicht mit 1 bis 6 Kohlenstoffatomen oder Mischungen davon, umgesetzt wird.

2. Verfahren nach Anspruch 1, wobei die Alkanole mit niedrigem Molekulargewicht Mischungen von Methanol und Ethanol in einem Verhältnis 1 : 0.8 bis 1 : 1.2 sind.

3. Pharmazeutische Zusammensetzungen umfassend die Verbindung nach Anspruch 1, gegebenenfalls zusammen mit pharmazeutischen Trägern und/oder Adjuvantien.

4. Verwendung der Verbindung nach Anspruch 1 zur Herstellung pharmazeutischer Zusammensetzungen zur Behandlung von Tumorerkrankungen.

5. Verbindung der Formel I zur pharmazeutischen Anwendung.

## Revendications

1. Procédé pour préparer du platine-(II)-cis-dichlorobis(trishydroxyméthylphosphine) ayant la formule (I) :

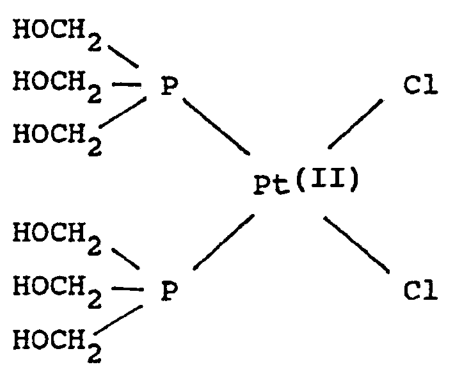

(I)

caractérisé en ce que l'on fait réagir du platine-(II)-dichloro(1,5-cyclooctadiène) avec de la tris(hydroxyméthyl)phosphine dans un milieu contenant un solvant choisi parmi les alcanols à bas poids moléculaire ayant de 1 à 6 atomes de carbone ou leurs mélanges.

2. Procédé revendiqué dans la revendication 1, où lesdits alcanols à bas poids moléculaire sont des mélanges de méthanol et d'éthanol dans un rapport 1 : 0,8 à 1 : 1,2.

3. Composition pharmaceutique comprenant le composé de la revendication 1, associé à titre facultatif avec des vecteurs pharmaceutiques et/ou des adjuvants.

4. Utilisation du composé de la revendication 1 pour la préparation de compositions pharmaceutiques pour le traitement de maladies tumorales.

5. Composé de la formule I pour utilisation pharmaceutique.